# EUROPEAN PATENT APPLICATION

(11) **EP 2 881 413 A1**
(43) Date of publication of application: **10.06.2015**
(21) Application number: 13196281.3
(22) Date of filing: 09.12.2013
(51) Int. Cl.: C08G 18/66, C08G 18/76, C08J 9/00, C08K 3/02, C08G 18/09, C08G 18/36, C08K 7/02, C08G 101/00

(54) **A method for manufacturing rigid low-density polyisocyanurate bio-based foams filled with carbon fibers**

(71) Applicant: Latvijas Universitates agentura "Latvijas Universitates Polimeru mehanikas Instituts", 1006 Riga (LV)
(72) Inventor: Beverte, Ilze, LV-1021 R ga (LV); C bulis, U is, LV-1084 R ga (LV); Stirna, Uldis, LV-1082 R ga (LV); Andersons, J nis, LV-1024 R ga (LV)
(74) Representative: Vitina, Maruta

(57) **Abstract**

The invention relates to a method for manufacturing rigid low-density polyisocyanurate bio-based foams (density ≤ 100 kg/m³) applicable in structural, machine building and domestic appliances industries and may be used in sandwich panels, for the thermal insulation (both heat and cold) of roofs, as well as surfaces, especially horizontal ones, in cryogenic fuel tankers, refrigerated vans, cold-storage warehouses, etc.

Technical problem to be solved by the invention is increasing of stiffness, i.e. elasticity moduli (both in tension and compression) of the obtained rigid low-density polyisocyanurate bio-based foams.

The proposed method for manufacturing rigid low-density polyisocyanurate bio-based foams filled with carbon fibers comprises the steps of: a) mixing a polyols' blend comprising biopolyols with catalysts, a surfactant and a flame retardant, b) adding organically modified nanoclays by means of ultrasonication, c) cooling down the polyols' blend, d) mixing carbon fibers, e) adding a blowing agent, f) mixing the obtained final polyols' composition and an isocyanate component and g) pouring the obtained liquid composition into a mould for a free rise.

## Description

The invention relates to a method for manufacturing rigid low-density polyisocyanurate bio-based foams (density ≤ 100 kg/m³) applicable in structural, machine building and domestic appliances industries and may be used in sandwich panels, for the thermal insulation (both heat and cold) of roofs as well as surfaces, especially the horizontal ones, in cryogenic fuel tankers, refrigerated vans, cold-storage warehouses, etc.

There are known carbon fibre-reinforced polyurethane integral foams [Patent Application Publication EP0267603A2, 1986, Fibre-reinforced polyurethane integral foam mouldings. Inventor: Herbert Schaper], with the density of 1060 kg/m³, produced by mixing carbon fibers into a polyol/amine system and subsequent reaction injection moulding, in particular for the body parts for the automotive industry. The amount of carbon fibres is from 0.3 to 8 wt% of foams weight. However, the known method is only partly appropriate for manufacturing rigid low-density (density ≤ 100 kg/m³) polyurethane or polyisocyanurate bio-based foams filled with carbon fibers due to the clamping tendency of carbon fibers into the polymeric knots. Many polymeric struts of rigid low-density polyisocyanurate foams remain unfilled. As a result, the increase of foams stiffness, i.e. elasticity moduli (both in tension and compression) is insufficient with regard to the concentration of the carbon fibers.

Rigid polyurethane foams filled with nanoclay up to 10 wt% of foams weight are known [Patent US6518324 B1, 2003 Polymer Foam Containing Nanoclay. Inventors Jiri E.Kresta et al.]. Typical rigid polyurethane foams formulations with high isocyanurate content were used to investigate the effect of nanoclay on the physical properties of rigid polyurethane foams. No details about cell sizes or mechanical properties, including those of stiffness results were reported. Krishnamurthi et al. [Krishnamurthi, B.; Bharadwaj-Somaskandan, S.; Shutov, F. Nano- and micro-fillers for polyurethane foams: effect on density and mechanical properties. Proceedings of Polyurethanes Expo; Columbus, OH, Sept. 30-Oct. 3, 2001, 239-244] also found that addition of the amount of nanoclay as high as 5 wt% increased the density and compression strength of flexible polyurethane foams, but in rigid polyurethane foams they observed the effect reversed: both density and compression strength decreased.

There is known a method for synthesizing bio-based polyols from rapeseed oil (polyols' system comprising up to 80% of rapeseed oil esters) by amidization with diethanolamine; temperature 140°C, catalyst zinc acetate, rapeseed oil/diethanolamine molar ratio 2.9 / 1.0. The synthesis process is controlled from the diethanolamine (acid value and NH value) conversion degree. [The Effect of Nano- and Micro-Fillers on the Strength and Toughness of PIR Foams Obtained From Renewable Resources. Janis Andersons, Ugis Cabulis, Uldis Stirna. 13th International Conference on Fracture June 16-21, 2013, Beijing, China].

There is known a method for manufacturing rigid low-density polyisocyanurate foams filled with carbon fibers [The Effect of Nano- and Micro-Fillers on the Strength and Toughness of PIR Foams Obtained From Renewable Resources. Janis Andersons, Ugis Cabulis, Uldis Stirna. 13th International Conference on Fracture June 16-21, 2013, Beijing, China] comprising the steps of:
- mixing the carbon fibers of the selected type into the polyols' system (polyols, surfactant and catalysts) to obtain a carbon fibers' suspension in the polyols' system;
- stirring of the carbon fibers' suspension in the polyols' system;
- adding the blowing agent into the carbon fibers' suspension in the polyols' system;
- mixing of an isocyanate and the degassated carbon fibers' suspension in the polyols' system for 10-15 s;
- pouring of the un-reacted mixture into a plastic mould for free foaming.

However, polymer struts containing no carbon fibers were observed in the manufactured rigid low-density polyisocyanurate foams filled with carbon fibers even at the highest carbon fibers' filling, which might have served as the sites of failure initiation, thus negating any increase in the strength of the fiber-reinforced struts. No experimental data on the stiffness of the manufactured rigid low-density polyisocyanurate foams filled with carbon fibers was reported.

There is known a method for manufacturing rigid low-density polyurethane foams filled with carbon fibers [V. Yakushin, U. Stirna, L. Bel'kova, L. Deme, an:d I. Sevastyanova. Properties of Rigid Polyurethane Foams Filled with Milled Carbon Fibers, Mechanics of Composite Materials, Vol. 46, No. 6, 2011, p. 679 - 688] comprising the steps of:
- mixing polyol mix with catalysts, a surfactant and a blowing agent,
- mixing polyacrylnitrile (PAN) carbon fibers with the diameter of 7 µm and the length grades of 50-150 or 40-70 µm in the amount of 1-12 wt% of foams weight into the polyol mix with the catalysts, the surfactant and the blowing agent,
- mixing the obtained final polyol composition and an isocyanate component,
- pouring the obtained liquid composition into a mould to rise.

The obtained rigid low-density polyurethane foams (density ≤ 100 kg/m³) were investigated in a light microscope (LM). It was observed that the PAN carbon fibers were partly clamped in polymeric knots and were not distributed uniformly in the polymeric struts, which are the main load carrying elements in the low-density foams. As a result, the increase of foams stiffness, i.e. the elasticity moduli (both in tension and compression) is insufficient with regard to the concentration of the PAN carbon fibers.

Technical problem to be solved by the present invention is increasing of stiffness, i.e. the elasticity moduli (both in tension and compression) of the rigid low-density polyisocyanurate bio-based foams (density < 100 kg/m³) with the isocyanate index 160≤II≤190 and having petrochemical origin polyol partially replaced with renewable bio-based polyols.

The proposed method for manufacturing rigid low-density polyisocyanurate bio-based foams with density not more than 100 kg/m³ filled with carbon fibers comprises the steps of:
a) mixing a polyols' blend containing at least 50 wt% of biopolyols synthesized from rapeseed oil with catalysts, a surfactant and a flame retardant,
b) adding organically modified nanoclays with the average diameter of un-exfoliated particles of 5-50 µm in the amount of 1-3 wt% of foams weight into the polyols' blend with the catalysts, the surfactant and the flame retardant by means of ultrasonication,
c) cooling down the polyols' blend with the catalysts, the surfactant, the flame retardant and the nanoclays to room temperature,
d) mixing the carbon fibers with the average diameter of 5-10 µm and the length of 30-80 µm in the amount of 1-5 wt% of foams weight into the polyols' blend with the catalysts, the surfactant, the flame retardant and the nanoclays,
e) adding a blowing agent into the composition obtained in step d) to obtain a final polyols' composition,
f) mixing the obtained final polyols' composition and an isocyanate component to obtain a liquid composition,
g) pouring the obtained liquid composition into a mould for a free rise.

Introduction of the organically modified nanoclays with the average diameter of un-exfoliated particles of 5-50 µm in the amount of 1-3 wt% of foams weight into the polyols' blend with the catalysts, the surfactant and the flame retardant by means of ultrasonication increases considerably the viscosity of the polyols' blend with the catalysts, the surfactant and the flame retardant without entering of the nanoclays into chemical reaction with the blowing agent. Therefore, the carbon fibers are more stably suspended and more homogeneously dispersed in the polyols' blend with the catalysts, the surfactant and the flame retardant.

The transmission electron microscopy (TEM) of the obtained rigid low-density polyisocyanurate bio-based foams shows that not all particles of the nanoclays are exfoliated. A certain amount of agglomerates of nanoclays' particles is still present in the polymeric matrix. The said agglomerates also facilitate dispersion of the carbon fibers in the polyols' blend with the catalysts, the surfactant and the flame retardant. The increased dispersion of the carbon fibers is retained after mixing the obtained final polyols' composition and the isocyanate component.

Investigation by LM of the obtained rigid low-density polyisocyanurate bio-based foams shows that the amount of the carbon fibers clamped in the polymeric knots has reduced by 20 - 30 % in comparison to that in rigid low-density polyisocyanurate bio-based foams without nanoclays. As a result, the major part of the carbon fibers is included in polymeric struts of the obtained rigid low-density polyisocyanurate bio-based foams. The foams stiffness i.e. the elasticity moduli (both in tension and compression) is increased. Partial replacing of petrochemical origin polyol with renewable bio-based polyols, preferably polyols synthesized from rapeseed oil (a renewable resource), facilitates the sustainability and greenness of the polyisocyanurate bio-based foams production.

The obtained rigid low-density polyisocyanurate bio-based foams with the density not more than 100 kg/m³ filled with the carbon fibers manufactured by the proposed method comprises fillers, wt% of foams weight:
- carbon fibers with the average diameter of a monofilament 7 µm 1-5,
- nanoclays with the average diameter of un-exfoliated particles of 5-50 µm 1-3.

The properties of the rigid low-density polyisocyanurate bio-based foams filled with the carbon fibers manufactured by the proposed method are shown on Figs., which present:

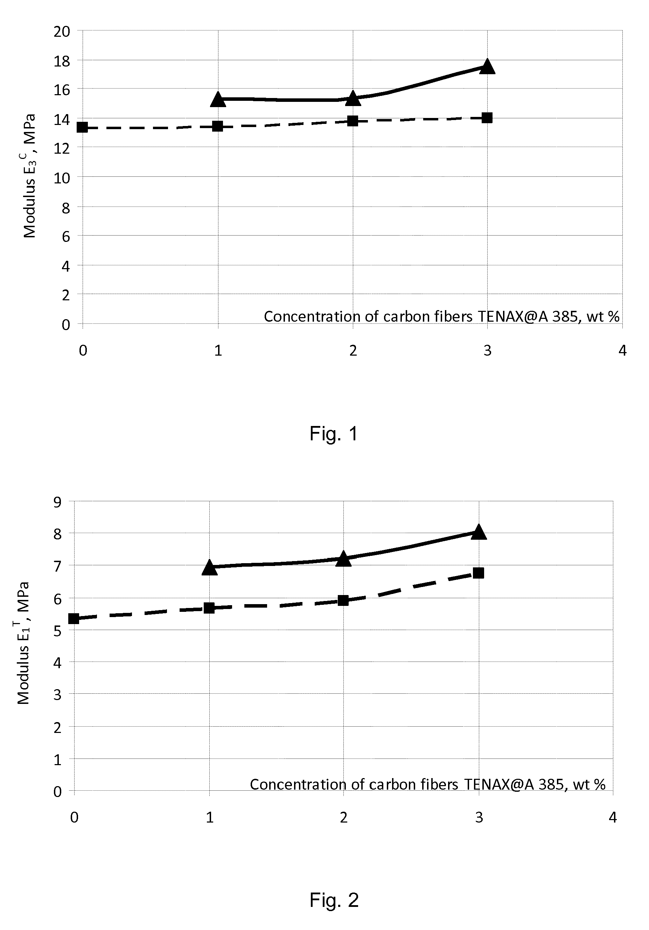

Fig.1 - Modulus E₃^{C}, MPa, in compression parallel to the foams rise direction OX₃ in the dependence of the carbon fibers TENAX@A 385 concentration, wt% of foams weight, dashed line - for foams filled only with the carbon fibers TENAX@A 385, without nanoclays; solid line - for foams filled with the carbon fibers TENAX@A 385 and with organically modified nanoclays with the average diameter of un-exfoliated particles of 5-13 µm in the amount of 2.0 wt% of foams weight.
Fig.2 - Modulus E₃^{T}, MPa, in tension perpendicular to the foams rise direction OX₃ in the dependence of carbon fibers TENAX@A 385 concentration, wt% of foams weight, dashed line - for foams filled only with the carbon fibers TENAX@A 385, without nanoclays; solid line - for foams filled with the carbon fibers TENAX@A 385 and with organically modified nanoclays with the average diameter of un-exfoliated particles of 5-13 µm in the amount of 2.0 wt% of foams weight.

The proposed method for manufacturing rigid low-density polyisocyanurate foams filled with the carbon fibers is performed as described in the following examples, which are not the only possible ones.

The components used in the method for manufacturing rigid low-density polyisocyanurate foams are the following.

The nanoclay Cloisite® 30B from ROCKWOOD is a natural montmorillonite, d001 = 18.5A (X-ray results), modified with quaternary ammonium salt, the characteristic properties according to the producer's information are given in Tables 2 and 3.

The fibers Tenax®-A Type 383 are milled PAN carbon fibers from Toho Tenax, unsized, and suitable for use in all resins and processes. The aspect ratio of milled carbon fibers provides mechanical reinforcement and dimensional stability to polymer compounds. Characteristic properties according to the producer's information are given in Table 4.

**Table 1. Composition of the rigid low-density polyisocyanurate bio-based foams.**

| Component | | pbw |
|---|---|---|
| Polyols' blend | | |
| | Biopolyols - rapeseed oil diethanolamids (OH value 410 mg KOH/g) | 70 |
| | Polyether polyol Lupranol 3422 (OH value 490 mg KOH/g) | 30 |
| Surfactant | | |
| | Niax silicone L6915 | 1.5 |
| Catalysts | | |
| | Potassium acetate 30% solution in diethylene glycol | 1.0 |
| | Polycat 5 | 1.0 |
| Blowing agent | | |
| | Cyclopentane | 11 *) |
| Flame retardant | | |
| | Trichloro propyl phosphate TCPP | 25 |
| Isocyanate component | | |
| | Polymeric methylene-4,4'-diphenyl diisocyanate | 180 |
| Start time, s | | 25 |
| Gel time | | 60 |
| Tack free time | | 120 |
| Isocyanate index II | | 180 |

| | | |
|---|---|---|
| *) The amount of cyclopentane was varied in the limits 9 - 14 to obtain one and the same density of foams at varying temperature of the environment. | | |

**Table 2. Typical dry, un-exfoliated particle's sizes (by volume) of the nanoclay Cloisite® 30B from ROCKWOOD.**

| | | |
|---|---|---|
| 10% less than | 50% less than | 90% less than |
| 2 µm | 6 µm | 13 µm |

**Table 3. Density characteristics of the nanoclay Cloisite® 30B from ROCKWOOD..**

| Loose bulk, kg/m³ | Packed bulk, kg/m³ | Density, g/cm³ |
|---|---|---|
| 228.3 | 364.8 | 1.98 |

**Table 4. Characteristics of PAN carbon fibers Tenax®-A Type 385.**

| Typical Filament Properties | Average Value | Units |
|---|---|---|
| Tensile strength | 4,275 | MPa |
| Tensile modulus | 225 | GPa |
| Ultimate elongation | 1.9 | % |
| Carbon density | 1.82 | g/cm³ |
| Filament diameter | 7 | µm |
| Typical milled properties | Average Value | Units |
| Fiber length | 40 - 70 | µm |
| Moisture content | < 0.3 | % |

### Example 1

100 g of the polyols' blend are mixed with 2 g of catalysts, 1.5 g of a surfactant and 25 g of a flame retardant.

6.59 g of organically modified nanoclays with the average diameter of un-exfoliated particles of 5-13 µm are added into the polyols' blend with the catalysts, the surfactant and the flame retardant by means of ultrasonication, ultrasonic frequency 20-25 kHz, max power 650 W, for 60 minutes.

During ultrasonication the polyols' blend with the catalysts, the surfactant and the flame retardant warms up; therefore, it is cooled down to room temperature to avoid the evaporation of the blowing agent due to exceeding its boiling pint.

3.29 g of the carbon fibers with the average diameter of 5-10 µm and the length of 30-80 µm are mixed into the polyols' blend with catalysts, the surfactant, the flame retardant and the nanoclays by a mechanical mixer, 200 rpm, for 3 minutes.

11 g of a blowing agent are added into the polyols' blend with the catalysts, the surfactant, the flame retardant and the nanoclays by mechanical mixing and a final polyols' composition is obtained.

The obtained final polyols' composition and 180 g of the isocyanate component are mixed and the obtained liquid composition is poured into a mould for a free rise.

Since the manufactured rigid low-density filled (with the nanoclays and the carbon fibers) polyisocyanurate bio-based foams have 95-98 % of closed cells, the blowing agent is retained in the said foams volume and 329.38 g of the rigid low-density filled (with the nanoclays and the carbon fibers) polyisocyanurate bio-based foams are obtained, containing 6.59 g (2 wt% of the said foams weight) of the nanoclays and 3.29 g (1 wt% of the said foams weight) of the carbon fibers.

### Example 2

100 g of the polyols' blend are mixed with 2 g of catalysts, 1.5 g of a surfactant and 25 g of a flame retardant.

6.66 g of organically modified nanoclays with the average diameter of un-exfoliated particles of 5-13 µm are added into the polyols' blend with the catalysts, the surfactant and the flame retardant by means of ultrasonication, ultrasonic frequency 20-25 kHz, max power 650 W, for 60 minutes.

During ultrasonication the polyols' blend with the catalysts, the surfactant and the flame retardant warms up; therefore, it is cooled down to room temperature to avoid the evaporation of the blowing agent due to exceeding its boiling pint.

6.66 g of the carbon fibers with the average diameter of 5-10 µm and the length of 30-80 µm are mixed into the polyols' blend with the catalysts, the surfactant, the flame retardant and the nanoclays by a mechanical mixer, 200 rpm, for 3 minutes.

11 g of a blowing agent are added into the polyols' blend with the catalysts, the surfactant, the flame retardant and the nanoclays by mechanical mixing and a final polyols' composition is obtained.

The obtained final polyols' composition and 180 g of the isocyanate component are mixed and the obtained liquid composition is poured into a mould for a free rise.

Since the manufactured rigid low-density filled (with the nanoclays and the carbon fibers) polyisocyanurate bio-based foams have 95-98 % of closed cells, the blowing agent is retained in the said foams volume and 332.81 g of the rigid low-density filled (with the nanoclays and the carbon fibers) polyisocyanurate bio-based foams are obtained, containing 6.66 g (2 wt% of the said foams weight) of the nanoclays and 6.66 g (2 wt% of the said foams weight) of the carbon fibers.

### Example 3

100 g of the polyols' blend are mixed with 2 g of catalysts, 1.5 g of a surfactant and 25 g of a flame retardant.

6.73 g of organically modified nanoclays with the average diameter of un-exfoliated particles of 5-13 µm are added into the polyols' blend with the catalysts, the surfactant and the flame retardant by means of ultrasonication, ultrasonic frequency 20-25 kHz, max power 650 W, for 60 minutes.

During ultrasonication the polyols' blend with the catalysts, the surfactant and the flame retardant warms up; therefore, it is cooled down to room temperature to avoid the evaporation of the blowing agent due to exceeding its boiling pint.

10.09 g of the carbon fibers with the average diameter of 5-10 µm and the length of 30-80 µm are mixed into the polyols' blend with the catalysts, the surfactant, the flame retardant and the nanoclays by a mechanical mixer, 200 rpm, for 3 minutes.

11 g of a blowing agent are added into the polyols' blend with the catalysts, the surfactant, the flame retardant and the nanoclays by mechanical mixing and a final polyols' composition is obtained.

The obtained final polyols' composition and 180 g of the isocyanate component are mixed and the obtained liquid composition is poured into a mould for a free rise.

Since the manufactured rigid low-density filled (with the nanoclays and the carbon fibers) polyisocyanurate bio-based foams have 95-98 % of closed cells, the blowing agent is retained in the said foams volume and 336.32 g of the rigid low-density filled (with the nanoclays and the carbon fibers) polyisocyanurate bio-based foams are obtained, containing 6.73 g (2 wt% of the said foams weight) of the nanoclays and 10.09 g (3 wt% of the said foams weight) of the carbon fibers.

In order to evaluate the effect of nanoclays on the stiffness, i.e. elasticity moduli of the rigid low-density filled (with the nanoclays and the carbon fibers) polyisocyanurate bio-based foams, the rigid low-density polyisocyanurate bio-based foams filled only with the carbon fibers were manufactured as described in Examples 4-6.

### Example 4 (No nanoclays)

100 g of the polyols' blend are mixed with 2 g of catalysts, 1.5 g of a surfactant, 11 g of a blowing agent and 25 g of a flame retardant.

3.23 g of the carbon fibers with the average diameter of 5-10 µm and the length of 30-80 µm are mixed into the polyols' blend with the catalysts, the surfactant, the blowing agent and the flame retardant by a mechanical mixer, 200 rpm, for 3 minutes and a final polyols' composition is obtained.

The obtained final polyols' composition and 180 g of the isocyanate component are mixed and the obtained liquid composition is poured into a mould for a free rise.

Since the manufactured rigid low-density filled (with the nanoclays and the carbon fibers) polyisocyanurate bio-based foams have 95-98 % of closed cells, the blowing agent is retained in the said foams volume and 322.73 g of the rigid low-density filled (with the carbon fibers) polyisocyanurate bio-based foams are obtained, containing 3.23 g (1 wt% of the said foams weight) of the carbon fibers.

### Example 5 (No nanoclays)

100 g of the polyols' blend are mixed with 2 g of catalysts, 1.5 g of a surfactant, 11 g of a blowing agent and 25 g of a flame retardant.

6.52 g of the carbon fibers with the average diameter of 5-10 µm and the length of 30-80 µm are mixed into the polyols' blend with the catalysts, the surfactant, the blowing agent and the flame retardant by a mechanical mixer, 200 rpm, for 3 minutes and a final polyols' composition is obtained.

The obtained final polyols' composition and 180 g of the isocyanate component are mixed and the obtained liquid composition is poured into a mould for a free rise.

Since the manufactured rigid low-density filled (with the nanoclays and the carbon fibers) polyisocyanurate bio-based foams have 95-98 % of closed cells, the blowing agent is retained in the said foams volume and 326.02 g of the rigid low-density filled (with the carbon fibers) polyisocyanurate bio-based foams are obtained, containing 6.52 g (2 wt% of the said foams weight) of the carbon fibers.

### Example 6 (No nanoclays)

100 g of the polyols' blend are mixed with 2 g of catalysts, 1.5 g of a surfactant, 11 g of a blowing agent and 25 g of a flame retardant.

9.88 g of the carbon fibers with the average diameter of 5-10 µm and the length of 30-80 µm are mixed into the polyols' blend with the catalysts, the surfactant, the blowing agent and the flame retardant by a mechanical mixer, 200 rpm, for 3 minutes and a final polyols' composition is obtained.

The obtained final polyols' composition and 180 g of the isocyanate component are mixed and the obtained liquid composition is poured into a mould for a free rise.

Since the manufactured rigid low-density filled (with the nanoclays and the carbon fibers) polyisocyanurate bio-based foams have 95-98 % of closed cells, the blowing agent is retained in the said foams volume and 329.38 g of the rigid low-density filled (with the carbon fibers) polyisocyanurate bio-based foams are obtained, containing 9.88 g (3 wt% of the said foams weight) of the carbon fibers. The obtained rigid low-density polyisocyanurate bio-based foams filled with the carbon fibers and the nanoclays (Examples 1 - 3) and rigid low-density polyisocyanurate bio-based foams filled only with the carbon fibers (Examples 4-6), having density
p=49.0-52.0 kg/m³, are tested in compression parallel to the rise direction and in tension perpendicular to the rise direction. Samples for compression and for tension tests are taken from the middle, homogeneous part of the foams blocks of initial size 15 x 30 x 30 cm. The compression samples are parallelepipeds of 2 x 2 x 8 cm, the tension samples are two sided spades (ISO 1926 (2005)), speed of the crosshead 5 mm/min and testing environment temperature T = 23° C. Displacement is determined by a clip-on extensometer placed in the middle part of the compression samples' height or tension samples' length. Corresponding stress - strain diagrams are registered. Elasticity moduli E₃^{C} and E₁^{T} are calculated from the initial linear part of the stress - strain diagrams. The testing results are presented in Figs. 1 and 2.

The performed testing provided the following results:
- Stiffness (i.e. elasticity modulus E₃^{C}) of the filled (nanoclays and carbon fibers) low density polyisocyanurate bio-based foams, in compression parallel to the rise direction OX₃ increased for 15 - 30 % in comparison to the stiffness (i.e. elasticity modulus E₃^{C} of the foams containing no nanoclays (as shown in Fig. 1);
- Stiffness (i.e. elasticity modulus E₁^{T}) of the filled (nanoclays and carbon fibers) low density polyisocyanurate bio-based foams in tension perpendicular to the rise direction OX₃ increased for 30 - 50 % in comparison to the stiffness (i.e. elasticity modulus E₁^{T}) of the foams containing no nanoclays (as shown in Fig. 2).

The obtained low density rigid polyisocyanurate bio-based foams filled with the milled carbon fibers and the nanoclays could find practical applications in structural, machine building and domestic appliances industries for the thermal insulation (both heat and cold) of roofs, as well as surfaces, especially the horizontal ones, in cryogenic fuel tankers, refrigerated vans, cold-storage warehouses, etc.

## Claims

1. A method for manufacturing rigid low-density polyisocyanurate bio-based foams with a density not more than 100 kg/m³ filled with carbon fibers comprising the steps of
a) mixing a polyols' blend containing at least 50 wt% of biopolyols synthesized from rapeseed oil with catalysts, a surfactant and a flame retardant,
b) adding organically modified nanoclays with the average diameter of un-exfoliated particles of 5-50 µm in the amount of 1-3 wt% of foams weight into the polyols' blend with the catalysts, the surfactant and the flame retardant by means of ultrasonication,
c) cooling down the polyols' blend with the catalysts, the surfactant, the flame retardant and the nanoclays to a room temperature,
d) mixing the carbon fibers with the average diameter of 5-10 µm and the length of 30-80 µm in the amount of 1-5 wt% of foams weight into the polyols' blend with the catalysts, the surfactant, the flame retardant and the nanoclays,
e) adding a blowing agent into the composition obtained in step d) to obtain a final polyols' composition,
f) mixing the obtained final polyols' composition and an isocyanate component to obtain a liquid composition,
g) pouring the obtained liquid composition into a mould for a free rise.

2. Rigid low-density polyisocyanurate bio-based foams with the density not more than 100 kg/m³ filled with the carbon fibers manufactured by the method according to Claim 1 comprising fillers, wt% of foams weight:
- carbon fibers with the average diameter of a monofilament 7 µm 1-5;
- nanoclays with the average diameter of un-exfoliated particles of 5-50 µm 1-3.
